# EUROPÄISCHE PATENTSCHRIFT

(11) **EP 2 632 986 B1**
(45) Veröffentlichungstag und Bekanntmachung des Hinweises auf die Patenterteilung: **17.09.2014**
(21) Anmeldenummer: 11788073.2
(22) Anmeldetag: 19.10.2011
(51) Int. Cl.: C08L 83/04

(54) **HOCHTRANSPARENTE DURCH LICHT VERNETZBARE SILICONMISCHUNGEN**
HIGHLY TRANSPARENT SILICON MIXTURES THAT CAN BE CROSS-LINKED BY LIGHT
MÉLANGES DE SILICONE PHOTORÉTICULABLES HAUTEMENT TRANSPARENTS

(30) Priorität: 29.10.2010 DE 102010043149
(43) Veröffentlichungstag der Anmeldung: 04.09.2013
(73) Patentinhaber: Wacker Chemie AG, 81737 München (DE)
(72) Erfinder: MUELLER, Philipp, 84489 Burghausen (DE)
(74) Vertreter: Fritz, Helmut
(86) Internationale Anmeldenummer: PCT/EP2011/068250
(87) Internationale Veröffentlichungsnummer: WO 2012/055735

(56) Entgegenhaltungen:
- EP-A1- 0 707 028
- EP-A1- 2 239 302
- WO-A2-2009/027133
- DE-A1- 19 711 695
- US-B1- 6 274 692

## Beschreibung

Die Erfindung betrifft eine unter Lichteinfluss vernetzbare Siliconmischung mit hoher Anfangsfestigkeit sowie ein Verfahren zur Herstellung einer Siliconfaser aus der Siliconmischung.

Für den ultraschnellen Transport von elektronischen Daten über größe Distanzen werden zunehmend Lichtwellenleiter eingesetzt. Die Anforderungen an optische Reinheit sind sehr hoch, da jeder einzelne Partikel zu Streuverlusten führt, die akkumuliert über den Transportweg zu großen Verlusten und gegebenenfalls fehlerhaften Daten führen. Für die Herstellung von den entsprechend geforderten höchsttransparenten Lichtwellenleitern aus Silicon gab es bislang kein geeignetes Extrusionsverfahren, da die transparenten füllstofffreien, siliconharzverstärkten Siliconformulierungen keine ausreichende Anfangsfestigkeit (Green Strength) aufweisen um einen kontinuierlichen Herstellprozess mit herkömmlicher Extrusiontechnologie zu ermöglichen.

Schläuche oder Fasern aus Silicon werden durch Extrusion hergestellt. Hierbei wird die vernetzbare Formulierung in einem kontinuierlichen Prozess durch eine formgebende Düse extrudiert und anschließend in einem Heizkanal bei Temperaturen über 200°C vulkanisiert. Damit der Schlauch nicht abreisst und bei den hohen Vernetzungstemperaturen seine Geometrie beibehält sind hierzu Siliconformulierungen mit hoher Green Strength gefordert. Die hohe Green Strength wird über entsprechend hochviskose HTV-Siliconpolymere mit Kettenlängen von typischerweise 5000 bei gleichzeitiger Zugabe von hochdisperser Kieselsäure (HDK) erzielt. Die HDK wirkt hier zusätzlich verdickend und wird zwingend benötigt um eine ausreichende Green Strength für den Formerhalt und die thermische Vulkanisation zu erhalten.

In WO 2009/027133 sind lichtaktivierbare Siliconmischungen zur Extrusion von Formteilen beschrieben. Diese Siliconmischungen enthalten höchstviskose Siliconpolymere mit Kettenlängen größer 3000, um in Kombination mit dem Füllstoff HDK eine hinreichende Green Strength mit einer hohen Mooney-Viskosität von größer 10 zu erreichen. Mit den beschriebenen Formulierungen sind keine hochtransparenten Siliconformkörper herstellbar, da die Streuverluste am Füllstoff zu hoch sind.

Gegenstand der Erfindung ist eine unter Lichteinfluss vernetzbare transparente Siliconmischung enthaltend
(A) Organosiloxanharz, aufgebaut aus Einheiten der allgemeinen Formeln I, II, III und IV

   R₃SiO_{1/2} (I),

   R₂SiO_{2/2} (II),

   RSiO_{3/2} (III),

   SiO_{4/2} (IV),

   in denen
   - **R**: gegebenenfalls mit Halogenen substituierte gesättigte Kohlenwasserstoffreste mit 1-40 Kohlenstoffatomen, oder -OH bedeuten,
   mit der Massgabe, dass
   mindestens 20 Mol-% der Einheiten ausgewählt werden aus Einheiten der allgemeinen Formeln III und IV mindestens 2 der Reste R Alkenylreste mit 1-10 Kohlenstoffatomen sind und
   höchstens 2 Gew.-% der Reste R Reste-OH sind,
(B) mindestens zwei Alkenylgruppen pro Molekül enthaltendes Polyorganosiloxan mit einer Kettenlänge der längsten Kette von 200 bis 10 000 Siloxyeinheiten,
(C) mindestens zwei SiH-Funktionen pro Molekül enthaltende Organosiliciumverbindung und
(D) durch Licht von 200 bis 500 nm aktivierbaren Katalysator MeCp (PtMe₃).

Die Siliconmischung weist eine ausreichende Anfangsfestigkeit (Green Strength) auf, mit der lange Siliconfasern extrudiert und danach bei geringer Temperatur mit Licht gehärtet werden können. Gleichzeitig weist die Siliconmischung eine hervorragende Transparenz auf, die sie für Lichtwellenleiter geeignet macht.

Die Kohlenwasserstoffreste **R** können halogensubstituiert, linear, zyklisch, verzweigt, aromatisch, gesättigt oder ungesättigt sein.

Beispiele für unsubstituierte Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert. Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie o-, m-, p-Tolylreste und Ethylphenylreste; Aralkylreste, wie der Benzylrest, der alpha-und der ß-Phenylethylrest.

Beispiele für substituierte Kohlenwasserstoffreste als Reste **R** sind halogenierte Kohlenwasserstoffe, wie der Chlormethyl-, 3-Chlorpropyl-, 3-Brompropyl, 3,3,3-Trifluorpropyl und 5,5,5,4,4,3,3-Hexafluorpentylrest sowie der Chlorphenyl-, Dichlorphenyl- und Trifluortolylrest.

Vorzugsweise weisen die Kohlenwasserstoffreste **R** 1 bis 6 Kohlenstoffatome auf, besonders bevorzugt sind Alkylreste und Phenylreste. Bevorzugte Halogensubstituenten sind Fluor und Chlor. Besonders bevorzugte einwertige Kohlenwasserstoffreste **R** sind Methyl, Ethyl, Phenyl.

Die Alkenylgruppen **R** sind einer Anlagerungsreaktion mit den SiH-Funktionen der Organosiliciumverbindung (C) zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Die Organosiloxanharze (A) enthalten vorzugsweise mindestens 30 Mol-%, insbesondere mindestens 40 Mol-% und vorzugsweise höchstens 80 Mol-%, insbesondere höchstens 70 Mol-% -Einheiten der allgemeinen Formeln III und IV.

Die Organosiloxanharze (A) sind vorzugsweise MQ-Siliconharze (MQ), welche mindestens 80 Mol-% Einheiten, vorzugsweise mindestens 95 Mol-%, insbesondere mindestens 97 Mol-% Einheiten der allgemeinen Formeln I und IV enthalten. Das durchschnittliche Verhältnis der Einheiten der allgemeinen Formeln I zu IV beträgt vorzugsweise mindestens 0,25, insbesondere mindestens 0,5 und vorzugsweise 2, besonders bevorzugt höchstens 1, 5.

Vorzugsweise sind höchstens 1 Gew.-%, insbesondere höchstens 0,5 Gew.-% der Reste **R** Reste OH.

Vorzugsweise sind mindestens 0,1 Mol-%, besonders bevorzugt mindestens 0,5 Mol-%, insbesondere mindestens 2 Mol-% und vorzugsweise höchstens 20 Mol-%, insbesondere höchstens 10 Mol-% der Reste **R** Alkenylreste mit 1-10 Kohlenstoffatomen.

Das durchschnittliche Molekulargewicht Mn der Organosiloxanharze (A) beträgt vorzugsweise mindestens 200 g/mol, insbesondere mindestens 1000 g/mol und vorzugsweise höchstens 100000 g/mol, insbesondere höchstens 20000 g/mol.

Die Zusammensetzung des Alkenylgruppen enthaltenden Polyorganosiloxans (B) entspricht vorzugsweise der durchschnittlichen allgemeinen Formel V

R¹ₓR²_{y}SiO_{(4-x-y)/2} (V),

in der
- **R¹**: einen einwertigen, gegebenenfalls halogen- oder cyanosubstituierten, gegebenenfalls über eine organische zweiwertige Gruppe an Silicium gebundenen C₁-C₁₀-Kohlenwasserstoffrest, der aliphatische Kohlenstoff-Kohlenstoff Mehrfachbindungen enthält,
- **R²**: einen einwertigen, gegebenenfalls halogen- oder cyanosubstituierten, über SiC-gebundenen C₁-C₁₀-Kohlenwasserstoffrest, der frei ist von aliphatischen Kohlenstoff-Kohlenstoff Mehrfachbindungen
- **x**: eine solche nichtnegative Zahl, dass mindestens zwei Reste
- **R¹**: in jedem Molekül vorhanden sind, und
- **y**: eine nicht negative Zahl, so daß **(x+y)** im Bereich von 1,9 bis 2,2, vorzugsweise 1,99 bis 2,05 liegt, bedeuten.

Vorzugsweise beträgt die Kettenlänge der längsten Kette des Polyorganosiloxans (B) mindestens 300 und höchstens 200 bis 7000 Siloxyeinheiten.

Beispiele und bevorzugte Alkenylgruppen **R¹** sind vorstehend für Reste **R** aufgeführt. Besonders bevorzugte Alkenylgruppen **R¹** sind Vinyl und Allyl.

Die Reste **R¹** können in jeder Position der Polymerkette, insbesondere an den endständigen Siliciumatomen, gebunden sein.

Beispiele für unsubstituierte und substituierte Reste **R²** sind vorstehend für Reste **R** aufgeführt.

**R²** weist vorzugsweise 1 bis 6 Kohlenstoffatome auf. Insbesondere bevorzugt sind Methyl und Phenyl.

Bestandteil (B) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane (B) kann linear, cyclisch oder auch verzweigt sein. Der Gehalt an zu verzweigten Polyorganosiloxanen führenden tri- und/oder tetrafunktionellen Einheiten, ist typischerweise sehr gering, vorzugsweise höchstens 1 Mol-%, insbesondere höchstens 0,1 Mol-%. Besonders bevorzugt ist die Verwendung Vinylgruppen enthaltender Polydimethylsiloxane, deren Moleküle der allgemeinen Formel VI

(ViMe₂SiO_{1/2})₂(ViMeSiO)ₚ(Me₂SiO)_{q} (VI),

entsprechen, wobei die nichtnegativen ganzen Zahlen **p** und **q** folgende Relationen erfüllen: **p**≥0, 200<**(p+q)**<10000, vorzugsweise 500<**(p+q)**<2000, und **p:(p+q)**<0,2, vorzugsweise <0,02, insbesondere <0,001.

Die Viskosität des Polyorganosiloxans (B) beträgt bei 25°C vorzugsweise 0,5 bis 100000 Pa·s, insbesondere 1 bis 2000 Pa·s.

Organische zweiwertige Gruppen, über die die Alkenylgruppen **R¹** an Silicium der Polymerkette gebunden sein können, sind vorzugsweise zweiwertige C₁-C₁₀- Kohlenwasserstoffreste.

Die Siliconmischung enthält vorzugsweise pro 100 Gewichtsteile Organosiloxanharz (A) mindestens 10 Gewichtsteile, besonders bevorzugt mindestens 25 Gewichtsteile, insbesondere mindestens 40 Gewichtsteile und vorzugsweise höchstens 90 Gewichtsteile, besonders bevorzugt höchstens 80 Gewichtsteile, insbesondere höchstens 70 Gewichtsteile Polyorganosiloxan (B).

Die mindestens zwei SiH-Funktionen pro Molekül enthaltende Organosiliciumverbindung (C), besitzt vorzugsweise eine Zusammensetzung der durchschnittlichen allgemeinen Formel VII

HₐR³_{b}SiO_{(4-a-b)/2} (VII),

in der
- **R³**: einen einwertigen, gegebenenfalls halogen- oder cyanosubstituierten, über SiC-gebundenen C₁-C₁₈-Kohlenwasserstoffrest, der frei ist von aliphatischen Kohlenstoff-Kohlenstoff Mehrfachbindungen und
- **a** und **b**: nichtnegative ganze Zahlen sind,
mit der Maßgabe, dass 0.5<**(a+b)**<3,0 und 0<**a**<2, und dass mindestens zwei siliciumgebundene Wasserstoffatome pro Molekül vorhanden sind.

Beispiele für **R³** sind die für **R** und **R²** angegebenen Reste. **R³** weist vorzugsweise 1 bis 6 Kohlenstoffatome auf. Insbesondere bevorzugt sind Methyl und Phenyl.

Bevorzugt ist die Verwendung einer drei oder mehr SiH-Bindungen pro Molekül enthaltenden Organosiliciumverbindung (C). Bei Verwendung einer nur zwei SiH-Bindungen pro Molekül aufweisenden Organosiliciumverbindung (C) empfiehlt sich die Verwendung eines Polyorganosiloxans (B), das über mindestens drei Alkenylgruppen pro Molekül verfügt.

Der Wasserstoffgehalt der Organosiliciumverbindung (C), welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew.-% Wasserstoff.

Die Organosiliciumverbindung (C) enthält vorzugsweise mindestens drei und höchstens 600 Siliciumatome pro Molekül. Bevorzugt ist die Verwendung von Organosiliciumverbindung (C), die 4 bis 200 Siliciumatome pro Molekül enthält.

Die Struktur der Organosiliciumverbindung (C) kann linear, verzweigt, cyclisch oder netzwerkartig sein.

Besonders bevorzugte Organosiliciumverbindungen (C) sind lineare Polyorganosiloxane der allgemeinen Formel VIII

(HR⁴₂SiO_{1/2})_{c}(R⁴₃SiO_{1/2})_{d}(HR⁴SiO_{2/2})ₑ(R⁴₂SiO_{2/2})_{f} (VIII),

wobei
**R⁴** die Bedeutungen von **R³** hat und
die nichtnegativen ganzen Zahlen **c**, **d**, **e** und **f** folgende Relationen erfüllen: (**c+d**)=2, (**c+e**)>2, 5<(**e+f**)<200 und 1<**e**/(**e +f**)<0,1.

Die SiH-funktionelle Organosiliciumverbindung (C) ist vorzugsweise in einer solchen Menge in der vernetzbaren Siliconmischung enthalten, dass das Molverhältnis von SiH-Gruppen zu Alkenylgruppen bei 0,5 bis 5, insbesondere bei 1,0 bis 3,0 liegt.

Katalysator (D) kann in jeder beliebigen Form eingesetzt werden, beispielsweise auch in Form von Hydrosilylierungskatalysator enthaltenden Mikrokapseln, oder Organopolysiloxanpartikeln, wie beschrieben in EP-A-1006147.

Der Gehalt an Hydrosilylierungskatalysatoren (D) wird vorzugsweise so gewählt, dass die Siliconmischung einen Gehalt an Metall der Platingruppe von 0,1-200 ppm, bevorzugt von 0,5-40 ppm besitzt.

Die Siliconmischung ist transparent und enthält vorzugsweise höchstens 2 Gew.-%, besonders bevorzugt höchstens 0,5 Gew.-%, insbesondere höchstens 0,01 Gew.-% Licht streuende Füllstoffe mit einem Durchmesser von mehr als 50 nm.

Die Siliconmischungen können als Bestandteil (E) weitere Zusätze zu einem Anteil von bis zu 70 Gew.-%, vorzugsweise 0,0001 bis 40 Gew.-%, enthalten. Diese Zusätze können z.B. harzartige Polyorganosiloxane, die von den Polyorganosiloxanen (A), (B) und (C) verschieden sind, Dispergierhilfsmittel, Lösungsmittel, Haftvermittler, Farbstoffe, Weichmacher, organische Polymere und Hitzestabilisatoren sein. Des Weiteren können als Bestandteil (E) thixotropierende Bestandteile enthalten sein.

Zusätzlich können auch als Kettenverlängerer Siloxane der Formel HSi(CH₃)₂-[O-Si(CH₃)₂]_{w}-H vorhanden sein, wobei **w** Werte von 1 bis 1000 bedeutet.

Enthalten sein können des Weiteren Zusätze (E), die der gezielten Einstellung der Verarbeitungszeit, Anspringtemperatur und Vernetzungsgeschwindigkeit der Siliconmischung dienen. Diese Inhibitoren und Stabilisatoren sind auf dem Gebiet der vernetzenden Massen sehr gut bekannt.

Zusätzlich können auch Additive hinzugefügt werden, die den Druckverformungsrest verbessern. Zusätzlich können auch nicht vinylfunktionalisierte Polydiorganosiloxane hinzugefügt werden. Die Siliconmischung weist vorzugsweise eine Viskosität [D = 0,5 1/s / 25°C] von mindestens 100 Pas, besonders bevorzugt mindestens 500 Pas, insbesondere mindestens 1000 Pas, vorzugsweise höchstens 500 000 Pas, insbesondere höchstens 10 000 Pas auf.

Die Compoundierung der Siliconmischung erfolgt durch Mischen der oben aufgeführten Komponenten in beliebiger Reihenfolge.

Gegenstand der Erfindung ist auch ein Verfahren zur Herstellung einer Siliconfaser, bei dem die vorstehende Siliconmischung über eine Düse kontinuierlich auf ein Förderband extrudiert und mit einer UV-Lichtquelle mit einer Wellenlänge von 200-500 nm, insbesondere 250-350 nm aktiviert und vulkanisiert wird.

Vorzugsweise beträgt die Dosis bei der Aktivierung mit Licht mindestens 0,1 J/cm², besonders bevorzugt mindestens 0,5 J/cm², und bevorzugt höchstens 20 J/cm², besonders bevorzugt höchstens 10 J/cm².

Am Ende des Förderbandes kann die hochtransparente Siliconfaser direkt abgenommen werden oder gegebenenfalls noch durch Erwärmen ausgehärtet werden, z.B. einen Heizkanal durchlaufen.

Die Extrusion findet bevorzugt bei mindestens 0°C, besonders bevorzugt mindestens 10°C, insbesondere mindestens 15°C und bevorzugt bei höchstens 50°C, besonders bevorzugt höchstens 35°C, insbesondere höchstens 25°C statt.

Die Aktivierung der extrudierten Siliconmischung mit Licht dauert bevorzugt mindestens 1 Sekunde, besonders bevorzugt mindestens 5 Sekunden und bevorzugt höchstens 500 Sekunden, besonders bevorzugt höchstens 100 Sekunden.

Durch die einsetzende Hydrosilylierungsreaktion beginnt die Vernetzung der Siliconmischung.

Die Aushärtung findet bevorzugt bei mindestens 10°C besonders bevorzugt mindestens 20°C und bevorzugt bei höchstens 60°C, besonders bevorzugt höchstens 40°C, insbesondere höchstens 30°C statt.

Würde man an Stelle der Siliconmischung ein nicht durch Lichteinfluss aushärtendes Silicon verwenden, würde die Viskosität der Mischung während des Aufwärmens von Raumtemperatur auf die zur Aushärtung benötigte Zieltemperatur absinken und verfließen. Eine kontinuierliche Herstellung einer Faser mit homogener Geometrie wäre nicht möglich.

Alle vorstehenden Symbole der vorstehenden Formeln weisen ihre Bedeutungen jeweils unabhängig voneinander auf. In allen Formeln ist das Siliciumatom vierwertig.

In den nachfolgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele

### Beschreibung der in den Beispielen 1 bis 6 eingesetzten Rohstoffe:

### MQ-Siliconharz:

Vinylfunktionalisiertes MQ-Siliconharzpulver MQ-Harz 804 aus M-, M^{vinyl}- und Q- Struktureinheiten, das sich wie folgt beschreiben lässt:
Molekulargewicht: Mw 5300 g/ml, Mn 2400 g/mol
Vinylgehalt: 70 mmol Vinyl /100g
M^{vinyl} / M / Q = 0,09 : 0,72 : 1

### Vinylpolysiloxane:

Es handelt sich um vinyldimethylsiloxyterminierte Dimethylpolysiloxane mit unterschiedlichen Viskositäten/Kettenlängen DP (Si-O Einheiten) die nach herkömmlichen Verfahren hergestellt wurden.

| | |
|---|---|
| Vinylpolymer 1: | 1020 mPas, DP = 183 |
| Vinylpolymer 2: | 20 100 mPas, DP = 615 |
| Vinylpolymer 3: | 503 200 mPas, DP = 1830 |
| Vinylpolymer 4: | 28 x 106 mPas, DP = 6550 |

### SiH-Vernetzer :

Der SiH-Vernetzer V100 ist ein trimethylsilylterminiertes Dimethyl/Methylhydrogen-Copolysiloxan und hat eine Viskosität von 9 mm²/s und einen H-Gehalt von 1,12 Gew.-%.

### Katalysatorbatch:

Der UV-Licht aktivierbare Platinkatalysator ist Trimethyl-, Methylcyclopentadienyl-Platin, gelöst in vinylterminiertem Polydimethylsiloxan mit einer Viskosität von 1000 mPas, Platinkonzentration 300 ppm.

### HDK:

HDK^{®} SKS 300, (Wacker Chemie AG) mit Hexamethyldisilazan hydrophobierte pyrogene Kieselsäure mit einer BET Oberfläche von 300 m²/g.

### Beschreibung der Extrusion und Vernetzung:

Die Formulierungen wurden in geeigneten Mischern oder Knetern unter Licht mit einer Wellenlänge von größer 500 nm zu einer homogenen Mischung gemischt und als einkomponentige Formulierung bei 25 °C durch eine Düse mit 2 mm Durchmesser auf ein mit Aluminiumfolie beschichtetes Förderband extrudiert. Das Förderband wurde mit einer Geschwindigkeit von 100cm/60sec betrieben.

Die auf das Förderband extrudierte Siliconmischung wurde mittels einer über dem Förderband hängenden UV-Lichtquelle bei 25 °C vernetzt. Die UV-Lichtquelle (UVASPOT 2000, Fa. Hönle) war mit einem F-Strahler ausgestattet der in einem Wellenlängenbereich von 250 - 400 nm UV-Licht emittiert. Nach der Vernetzung durch das UV-Licht wurde der Siliconstrang als kontinuierlicher Strang aufgewickelt.

### Tabelle 1 mit den Beispielen:

Beispiele 1-4 waren erfindungsgemäß; es wurden Vinylpolymere mit verschiedenen Viskositäten/Kettenlängen eingesetzt. Beispiel 5 war nicht erfindungsgemäß; das Material war ohne MQ-Siliconharz nicht prozessierbar, da es zerfloß. Beispiel 6, war nicht erfindungsgemäß; Beispiel analog WO2009/027133 A2, mit HDK war die Transparenz nicht gegeben.

**Tabelle 1**

| | **Beispiel** | | **2** | **3** | **4** | **5*** | **6*** |
|---|---|---|---|---|---|---|---|
| **Zusammensetzung** | MQ-Harz 804 | 100 | 100 | 100 | 100 | - | - |
| | Vinylpolymer 1 | 60 | - | - | - | - | - |
| | Vinylpolymer 2 | - | 60 | - | - | - | - |
| | Vinylpolymer 3 | - | - 60 | 60 | - | - | - |
| | Vinylpolymer 4 | - | - | - | 60 | 100 | 100 |
| | SiH Vernetzer V 100 | 12 | 12 | 12 | 12 | 5 | 5 |
| | Katalysatorbatch | 0,02 | 0,02 | 0,02 | 0,02 | 0,02 | 0,02 |
| | HDK | - | - | - | - | - | 30 |
| **Verarbeitba rkeit** | Kontinuierliche Faserherstellung | ja | ja | ja | ja | **nein** | ja |
| **Analytik** | Shore A Härte | 68 | 69 | 67 | 66 | 6 | 36 |
| | Faserform / Verhältnis Höhe zu Breite der Faser | rundlich 0.88 | rundlich 0.90 | rundlich 0.93 | rundlich 0.95 | **keine Faser** | rundlich 0.95 |
| | Transmission 20 mm bei 400 nm | > 88 | > 88 | > 88 | > 88 | > 88 | **59** |

| | | | | | | | |
|---|---|---|---|---|---|---|---|
| * nicht erfindungsgemäss | | | | | | | |

## Patentansprüche

1. Unter Lichteinfluss vernetzbare transparente Siliconmischung enthaltend
(A) Organosiloxanharz, aufgebaut aus Einheiten der allgemeinen Formeln I, II, III und IV
R₃SiO_{1/2} (I),
R₂SiO_{2/2} (II),
RSiO_{3/2} (III),
SiO_{4/2} (IV),
in denen
**R** gegebenenfalls mit Halogenen substituierte gesättigte Kohlenwasserstoffreste mit 1-40 Kohlenstoffatomen, oder -OH bedeuten,
mit der Massgabe, dass
mindestens 20 Mol-% der Einheiten ausgewählt werden aus Einheiten der allgemeinen Formeln III und IV mindestens 2 der Reste **R** Alkenylreste mit 1-10 Kohlenstoffatomen sind und
höchstens 2 Gew.-% der Reste **R** Reste-OH sind,
(B) mindestens zwei Alkenylgruppen pro Molekül enthaltendes Polyorganosiloxan mit einer Kettenlänge der längsten Kette von 200 bis 10 000 Siloxyeinheiten,
(C) mindestens zwei SiH-Funktionen pro Molekül enthaltende Organosiliciumverbindung und
(D) durch Licht von 200 bis 500 nm aktivierbaren Katalysator MeCp(PtMe₃).

2. Siliconmischung nach Anspruch 1, bei der das Organosiloxanharz (A) ein MQ-Siliconharz (MQ) ist, welches mindestens 80 Mol-% Einheiten der allgemeinen Formeln I und IV enthalten.

3. Siliconmischung nach Anspruch 1 oder 2, bei der das Polyorganosiloxan (B) der durchschnittlichen allgemeinen Formel V entspricht
R¹ₓR²_{y}SiO_{(4-x-y)/2} (V),
in der
**R¹** einen einwertigen, gegebenenfalls halogen- oder cyanosubstituierten, gegebenenfalls über eine organische zweiwertige Gruppe an Silicium gebundenen C₁-C₁₀-Kohlenwasserstoffrest, der aliphatische Kohlenstoff-Kohlenstoff Mehrfachbindungen enthält,
**R²** einen einwertigen, gegebenenfalls halogen- oder cyanosubstituierten, über SiC-gebundenen C₁-C₁₀-Kohlenwasserstoffrest, der frei ist von aliphatischen Kohlenstoff-Kohlenstoff Mehrfachbindungen
**x R¹** eine solche nichtnegative Zahl, dass mindestens zwei Reste in jedem Molekül vorhanden sind, und
**y** eine nicht negative Zahl, so daß **(x+y)** im Bereich von 1,9 bis 2,2 liegt, bedeuten.

4. Siliconmischung nach Anspruch 1 bis 3, bei der die Organosiliciumverbindung (C) eine Zusammensetzung der durchschnittlichen allgemeinen Formel VII besitzt
HₐR³_{b}SiO_{(4-a-b)/2} (VII),
in der
**R³** einen einwertigen, gegebenenfalls halogen- oder cyanosubstituierten, über SiC-gebundenen C₁-C₁₈-Kohlenwasserstoffrest, der frei ist von aliphatischen Kohlenstoff-Kohlenstoff Mehrfachbindungen und
**a** und **b** nichtnegative ganze Zahlen sind, mit der Maßgabe, dass 0.5<**(a+b)**<3,0 und 0<**a**<2, und dass mindestens zwei siliciumgebundene Wasserstoffatome pro Molekül vorhanden sind.

5. Verfahren zur Herstellung einer Siliconfaser, bei dem die vorstehende Siliconmischung gemäß Anspruch 1 bis 4 über eine Düse kontinuierlich auf ein Förderband extrudiert und mit einer UV-Lichtquelle mit einer Wellenlänge von 200-500 nm aktiviert und vulkanisiert wird.

## Claims

1. Transparent silicone mixture crosslinkable under the influence of light, comprising
(A) organosiloxane resin formed from units of the general formulae I, II, III and IV
R₃SiO_{1/2} (I),
R₂SiO_{2/2} (II),
RSiO_{3/2} (III),
SiO_{4/2} (IV),
in which
**R** represents saturated hydrocarbyl radicals optionally substituted by halogens and having 1-40 carbon atoms, or -OH, with the proviso that
at least 20 mol% of the units are selected from units of the general formulae III and IV, at least 2 of the **R** radicals are alkenyl radicals having 1-10 carbon atoms and
at most 2% by weight of the **R** radicals are -OH radicals,
(B) polyorganosiloxane containing at least two alkenyl groups per molecule and having a chain length of the longest chain of 200 to 10 000 siloxy units,
(C) organosilicon compound containing at least two SiH functions per molecule and
(D) catalyst MeCp (PtMe₃) activatable by light from 200 to 500 nm.

2. Silicone mixture according to Claim 1, in which the organosiloxane resin (A) is an MQ silicone resin (MQ) containing at least 80 mol% of units of the general formulae I and IV.

3. Silicone mixture according to Claim 1 or 2, in which the polyorganosiloxane (B) corresponds to the average general formula V
R¹ₓR²_{y}SiO_{(4-x-y)/2} (V)
in which
**R**¹ is a monovalent, optionally halogen- or cyano-substituted C₁-C₁₀ hydrocarbyl radical optionally bonded to silicon via an organic divalent group and containing aliphatic carbon-carbon multiple bonds,
**R**² is a monovalent, optionally halogen- or cyano-substituted, SiC-bonded C₁-C₁₀ hydrocarbyl radical free of aliphatic carbon-carbon multiple bonds,
**x** is a non-negative number such that at least two R¹ radicals are present in each molecule, and
**y** is a non-negative number such that **(x+y)** is in the range from 1.9 to 2.2.

4. Silicone mixture according to Claims 1 to 3, in which the organosilicon compound (C) has a composition of the average general formula VII HₐR³_{b}SiO_{(4-a-b)/2} (VII) in which
**R³** is a monovalent, optionally halogen- or cyano-substituted, SiC-bonded C₁-C₁₈ hydrocarbyl radical free of aliphatic carbon-carbon multiple bonds and
**a** and **b** are non-negative integers,
with the proviso that 0.5<**(a+b)**<3.0 and 0<**a**<2, and that at least two silicon-bonded hydrogen atoms are present per molecule.

5. Process for producing a silicone fiber, in which the above silicone mixture according to Claims 1 to 4 is extruded continuously through a die onto a conveyor belt and is activated and vulcanized with a UV light source having a wavelength of 200-500 nm.

## Revendications

1. Mélange siliconé transparent réticulable sous l'effet de la lumière, contenant
(A) une résine d'organosiloxane, formée à partir d'unités des formules générales I, II, III et IV
R₃SiO_{1/2} (I),
R₂SiO_{2/2} (II),
RSiO_{3/2} (III),
SiO_{4/2} (IV),
dans lesquelles
R signifie des radicaux hydrocarbonés saturés le cas échéant substitués par des halogènes, comprenant 1-40 atomes de carbone ou -OH, à condition qu'au moins 20% en mole des unités soient choisies parmi les unités des formules générales III et IV qu'au moins 2 des radicaux R soient des radicaux alcényle comprenant 1-10 atomes de carbone et au plus 2% en poids des radicaux R soient des radicaux -OH,
(B) un polyorganosiloxane contenant au moins deux groupes alcényle par molécule, présentant une longueur de chaîne de la plus longue chaîne de 200 à 10 000 unités siloxy,
(C) un composé organosilicié contenant au moins deux fonctions SiH par molécule et
(D) un catalyseur MeCp(PtMe₃) activable par une lumière de 200 à 500 nm.

2. Mélange siliconé selon la revendication 1, dans lequel la résine d'organosiloxane (A) est une résine silicone MQ (MQ), qui contient au moins 80% en mole d'unités des formules générales I et IV.

3. Mélange siliconé selon la revendication 1 ou 2, dans lequel le polyorganosiloxane (B) correspond à la formule générale moyenne V
R¹ₓR²_{y}SiO_{(4-x-y)/2} (V),
dans laquelle
R¹ signifie un radical hydrocarboné en C₁-C₁₀ monovalent, le cas échéant substitué par halogène ou cyano, le cas échéant lié via un groupe divalent organique au silicium, qui contient des liaisons carbone-carbone multiples aliphatiques,
R2 signifie un radical hydrocarboné en C₁-C₁₀ monovalent, le cas échéant substitué par halogène ou cyano, lié par SiC, qui est exempt de liaisons multiples aliphatiques carbone-carbone et
x signifie un nombre non négatif tel qu'il existe au moins deux radicaux R¹ dans chaque molécule, et
y signifie un nombre non négatif tel que (x + y) se situe dans la plage de 1,9 à 2,2.

4. Mélange siliconé selon la revendication 1 à 3, dans lequel le composé organosilicié (C) présente une composition de formule générale moyenne VII
HₐR³_{b}SiO_{(4-a-b)/2} (VII),
dans laquelle
R³ signifie un radical hydrocarboné en C₁-C₁₈ monovalent, le cas échéant substitué par halogène ou cyano, lié par SiC, qui est exempt de liaisons multiples aliphatiques carbone-carbone et
a et b signifient des nombres entiers non négatifs,
à condition que 0,5 < (a + b) < 3,0 et 0 < a < 2 et qu'il existe au moins deux atomes d'hydrogène liés par silicium par molécule.

5. Procédé de production d'une fibre siliconée, dans lequel le mélange siliconé ci-dessus selon la revendication 1 à 4 est extrudé en continu via une filière sur une bande transporteuse et est activé et vulcanisé par une source de lumière UV d'une longueur d'onde de 200-500 nm.
